# EUROPEAN PATENT SPECIFICATION

(11) **EP 0 353 862 B1**
(45) Date of publication and mention of the grant of the patent: **12.10.1994**
(21) Application number: 89306637.3
(22) Date of filing: 29.06.1989
(51) Int. Cl.: F01L 31/22, F01L 13/00, F01L 1/26

(54) **Irregularity-detecting method for variable valve-timing type engine**
Versagensfeststellungsverfahren für die Brennkraftmaschinen mit variabler Ventilsteuerung
Méthode de détection de défaut pour moteur du type à distribution variable

(30) Priority: 01.08.1988 JP 192241/88; 01.08.1988 JP 192243/88
(43) Date of publication of application: 07.02.1990
(73) Proprietor: HONDA GIKEN KOGYO KABUSHIKI KAISHA, Minato-ku, Tokyo (JP)
(72) Inventor: Seki, Yasunari c/o K.K. HONDA GIJUTSU KENKYUSHO, Wako-shi Saitama-ken (JP); Koike, Yuzuru c/o K.K. HONDA GIJUTSU KENKYUSHO, Wako-shi Saitama-ken (JP); Sato, Takashi c/o K.K. HONDA GIJUTSU KENKYUSHO, Wako-shi Saitama-ken (JP); Obata, Masatoshi c/o K.K. HONDA GIJUTSU KENKYUSHO, Wako-shi Saitama-ken (JP)
(74) Representative: Tomlinson, Kerry John

(56) References cited:
- EP-A- 265 281
- EP-A- 297 791

## Description

This invention relates to an irregularity-detecting method for a variable valve-timing type engine in which valve timing for at least each one of intake valves or exhaust valves in the engine is changed over by a hydraulically operated changeover mechanism.

There has been known heretofore from the Japanese Examined Patent Application Publication No. Tokkosho 49-33289 an engine in which a cam shaft provided with a high-speed cam and a low-speed cam is shifted in the axial direction by cylinder operation to change over valve timing as desired between a low-speed valve timing at which the intake and exhaust valves are opened and closed by the low-speed cam and a high-speed valve timing at which the intake and exhaust valves are opened and closed by the high-speed cam so that changeover of the valve timing is made by opening/closing operation of valve means that control charging oil to and discharging it from the cylinders.

When a hydraulically operated changeover mechanism is used to change over the valve timing as described in the foregoing, there sometimes occurs such an inconvenience that the valve means is not able to provide predetermined hydraulic pressure changes as expected when instructed to open or close due to the sticking of the valve means caused by an alien material clinging thereto or oil leakage or the like, with the result that the valve timing cannot be changed over normally. It is therefore much desired that a fail-safe arrangement be provided to cope with such a situation as above, said arrangement including, for example, an alarm to give out a warning, a measure to decrease fuel supply or invalidate the control action for changeover of the valve timing, or the like.

It is, therefore, the object of the present invention to provide and irregularity-detecting method instrumental to carrying out the much desired fail-safe control described above.

From EP-A-0 297 791, relevant according to Article 54(3) EPC, it is known to provide an engine valve operating control device including a hydraulic pressure operated selective coupling mechanism whose operability, or lack thereof, is sensed by detecting the actuating oil pressure supplied to the coupling, wherein any malfunction of the coupling that is detected leads to a fail safe condition where the fuel supply to the engine is cut off.

From EP-A-0 265 281 it is known to provide a fuel injection control method for an electronically controlled fuel injection type engine in which valve timing for at least one group of intake valves and exhaust valves is changed over by a hydraulically operated changeover mechanism and a valve means for controlling the oil supply to the changeover mechanism, the valve means comprising a changeover valve which is interposed in an oil supplying passage for supplying oil to the changeover mechanism and a control valve for controlling the changeover valve, said method comprising the steps of:
detecting an oil pressure of the oil supplying passage in a downstream portion of the changeover valve; and
confirming in accordance with changes of the detected oil pressure whether the valve timing has been actually changed over as attempted.

The present invention is characterised in that the method further comprises the steps of:
setting up a suitable quantity or rate of fuel injection for each of the valve timing settings and then selecting one according to the valve timing selected; and
continuing the fuel injection at an injection quantity corresponding to the valve timing before the valve timing changeover when the actual valve timing changeover is not confirmed.

To be more specific, the valve timing changeover herein refers to changing one or both of the valve-open duration and valve-lift amount. The valve timing changeover referred to herein also covers that, in a multi-valve engine, any one of a plurality of intake or exhaust valves for each cylinder of the engine is put to a quiescent position according to the operating condition of the engine.

When the oil pressure is not changed in accordance with an open-close instruction given to the valve means due to the sticking or oil leakage of the valve means, such is detected and determined as an irregularity in the valve timing changeover operation, so that a necessary fail-safe operation is performed.

There is a slight time lag between the time when an instruction to open or close the valve means is given out and the time when the oil pressure is actually changed in response to the instruction due to response delay of the valve means and duct-line resistance. In this case, if it is arranged such that whether or not the valve timing changeover is carried out normally is determined only after lapse of the predetermined time following outputting of the instruction to open and close the valve means, it can then be prevented that a fail-safe operation is erroneously performed due to such a time lag even when the valve timing changeover is being carried out normally.

The invention will now be illustrated by way of example only and with reference to the drawings, in which:
Figure 1 is a schematic diagram showing the method of the present invention applied to an engine;
Figure 2 is a diagram illustrating a valve timing changeover mechanism according to this invention;
Figure 3 is a diagram showing the characteristic curves for fuel injection quantities set for the high-speed valve timing and the low-speed valve timing;
Figure 4 is an enlarged view of a portion encircled in Figure 3;
Figure 5 is a diagram showing the T_{VT} table;
Figure 6 is a diagram showing the valve timing changeover characteristics;
Figure 7 comprising Figs. 7A and 7B is a flowchart of the valve timing changeover control routine;
Figure 8 is a flowchart of the subroutine for retrieval of the Ti_{L} map and the Ti_{H} map;
Figure 9 is a flowchart of the subroutine for calculation of Ti_{Vi}; and
Figure 10 is a flowchart of the subroutine for determination of a valve timing changeover irregularity and for fail-safe control thereof.

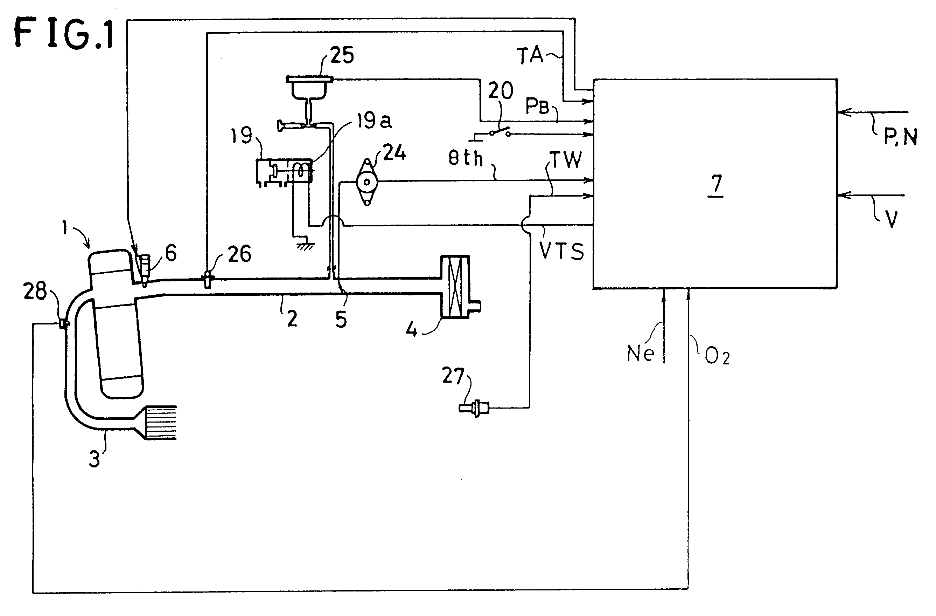

Referring to Figure 1, reference numeral 1 denotes an engine body, 2 denotes an intake passage, and 3 designates an exhaust passage. The intake passage 2 is provided with an air cleaner 4, a throttle valve 5 and an injector 6 in that order from the upstream side and quantity of fuel injection made through said injector 6 is variably controlled by an electronic control circuit 7, so that the engine arranged as above is an electronically controlled fuel injection type.

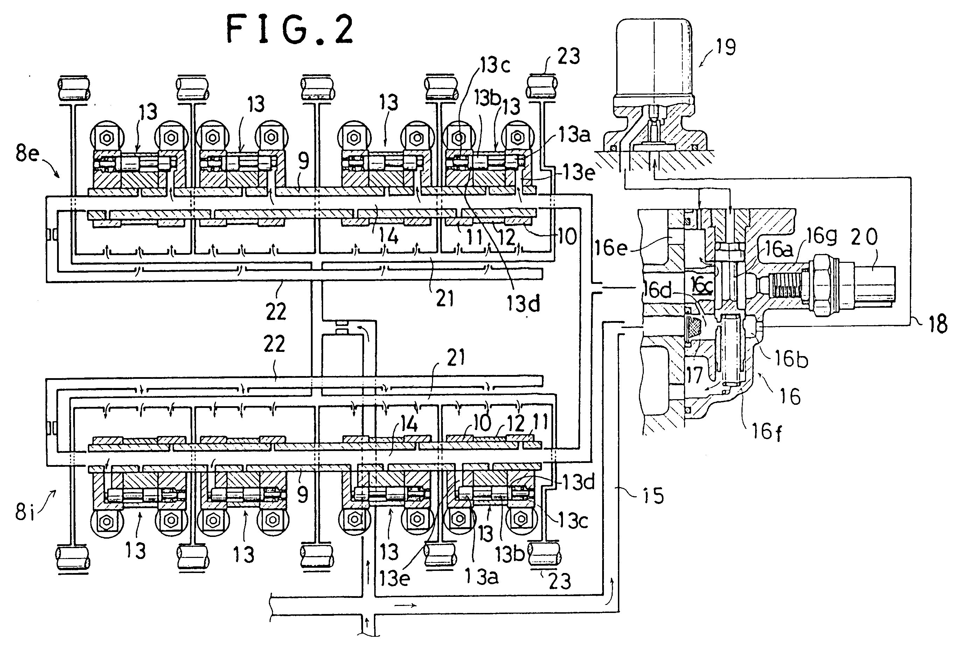

The engine used in this embodiment example of the present invention is a double overhead cam (DOHC), in-line four-cylinder engine having a pair of intake and exhaust valves for each cylinder and, as shown in Figure 2, it is further provided with a valve mechanism 8e at the exhaust valve side, said valve mechanisms being operated to drive these intake and exhaust valves to open and close.

Both the valve mechanisms 8i and 8e are basically of the same construction, so that detailed explanation will be made only of the intake-side valve mechanism hereinbelow while omitting that of the exhaust-side valve mechanism. Note that both of said valve mechanisms are assigned with same symbols and reference numerals for their corresponding parts.

The intake-side valve mechanism 8i comprises: a rocker shaft 9 for the intake valves; a pair of driving rocker arms 10, 11 pivotally supported on the rocker shaft 9 for driving a pair of the intake valves of each cylinder and a free rocker arm 12 located intermediately between said pair of the driving rocker arms 10, 11 and also pivotally supported on said rocker shaft 9, said driving rocker arms 10, 11 being interlocked with a low-speed cam formed on a cam shaft for the intake valves and said free rocker arm 12 being interlocked with a high-speed cam formed on the cam shaft; and a changeover mechanism 13 through which both the driving rocker arms 10, 11 are detachably connected to the free rocker arm 12. In this arrangement, when the driving rocker arms 10, 11 are disconnected form the free rocker arm 12, the intake valves are operated to open and close with a low-speed valve timing at which the valve-open duration and the valve-lift amount are made relatively smaller by means of the low-speed cam. On the other hand, when these arms are connected to each other, the intake valves are operated at a high-speed valve timing at which the valve-open duration and the valve-lift amount are relatively larger.

The changeover mechanism 13 comprises: a first connecting pin 13a which can be engaged with and disengaged from the free rocker arm 12, said first connecting pin 13a being inserted in the first driving rocker arm 10, that is, one of the two driving rocker arms 10, 11; a second connecting pin 13b which can be engaged with and disengaged from the second driving rocker arm 11, that is, the other of the two driving rocker arms 10, 11, said second connecting pin 13b being inserted in the free rocker arm 12; and a restriction pin 13d urged towards the free rocker arm 12 by a spring 13c inserted in the second driving rocker arm 11. There is formed in the first driving rocker arm 10 a hydraulic chamber 13e providing an oil pressure to push the first connecting pin 13a towards the free rocker arm 12, said hydraulic chamber 13e being communicated with an oil supplying passage 14 formed in the rocker shaft 9. When the hydraulic chamber 13e is charged with a hydraulic oil through the oil-supplying passage 14, the first connecting pin 13a becomes engaged with the free rocker arm 12 and, pushed by the first connecting pin 13a, the second connecting pin 13b comes to engage with the second driving rocker arm 11, so that both the driving rocker arms 10, 11 and the free rocker arm 12 are connected to each other to change the valve timing to a high-speed one. On the other hand, when oil pressure in the hydraulic chamber 13e is lowered, the second and the first connecting pins 13b and 13a are urged by the spring 13c through the restriction pin 13d and thus pushed back into the free rocker arm 12 and the first driving rocker arm 10, respectively, so as to disconnect both the driving rocker arms 10, 11 from the free rocker arm 12 and change the valve timing to a low-speed one.

Then, an oil passage 15 for supplying oil from an oil pump not shown is connected to the aforementioned oil supplying passage 14 through a changeover valve 16 attached to an end portion of the cylinder head, so that when a spool type valve body 16a of the changeover valve 16 is positioned at the upper closed position, an inlet port 16b communicating with the oil passage 15 through an oil filter 17 and an outlet port 16c communicating with the oil supplying passage 14 may be communicated with each other only through an orifice 16d. At this time, the outlet port 16c comes to be communicated with a drain port 16e which opens in the upper space in the cylinder head with the result that the oil pressure in the oil supplying passage 14 is decreased. When the spool type valve body 16a is shifted to the lower open position, the inlet port 16b and the outlet port 16c become communicated with each other through an annular groove provided in the spool type valve body 16a while the outlet port 16c becomes disconnected from the drain port 16e, so that the oil pressure in the oil supplying passage 14 is increased.

The spool type valve body 16a is arranged such that the changeover thereof to the open position is carried out against the urging force of a spring 16f by pilot pressure inputted through a pilot oil passage 18 branching out from the inlet port 16b. The pilot oil passage 18 is provided with a normally closed type electromagnetic valve 19. An electric current to energize a solenoid 19a of the electromagnetic valve 19 is controlled by output signal VTS from the electronic control circuit 7 as shown in Figure 1. When the electromagnetic valve 19 is opened with energization of the solenoid 19a (shown in Figure 1), the spool type valve body 16a is moved to its open position so that the valve timing is changed over to a high-speed one as described in the foregoing. When the electric current energizing the solenoid 19a is stopped to close the electromagnetic valve 19, the spool type valve body 16a is changed over to the closed position so that the valve timing is changed over to a low-speed one.

In addition, in order to confirm the changeover operation of the spool type valve body 16a, there is provided on a housing 16g in the changeover valve 16 a hydraulic switch 20 that detects oil pressure at the outlet port 16c and turns on when the detected oil pressure is low and turns off when the detected oil pressure is high.

Referring to Figure 2, reference numeral 21 denotes a lubricant passage of the valve mechanism, 22 designates a lubricant passage of the valve mechanism for the high-speed valve timing operation, and 23 denotes a cam holder.

The valve timing changeover means and oil passage arrangement described above are not particularly different from those disclosed in the Japanese Utility Model Registration Application No. Jitsugan Sho 63-82588 filed on June 22, 1988 by the applicants of the present patent application. Inputted in the electronic control circuit 7 are engine revolution speed (Ne) signals from an engine revolution speed sensor, throttle opening-degree (ϑth) signals from a throttle opening sensor 24, intake negative pressure (P_{B}) signals and intake temperature (TA) signals, respectively, from a pressure sensor 25 and a temperature sensor 26, both of which are connected to the intake passage 2 downstream of the throttle valve 5, water temperature (TW) signals from a water temperature sensor 27, vehicle speed (V) signals from a vehicle speed sensor, signals from the aforesaid hydraulic switch 20, O₂ signals from an oxygen concentration sensor 28 provided in the exhaust passage 3 and, in case of an automatic transmission car, additionally, parking (P) and neutral (N) signals from a shift lever position switch. Based on the operating condition determined from these signals, an appropriate fuel injection quantity is calculated and a suitable valve timing selected.

Here, the following equation holds:

$\text{Tout = K₁Ti + K₂,}$

where Tout stands for fuel injection quantity, Ti for standard fuel injection quantity, K₁ for correction factor, and K₂ for constant term. It should be noted that K₁ used herein include: an intake temperature correction factor K_{TA} by which the fuel injection quantity is increased when the intake temperature and/or the water temperature are low; a high-load fuel increase factor K_{WOT} by which the fuel injection quantity is increased in a prescribed high-load region determined by the water temperature correction factor K_{TW}, Ne, P_{B} and ϑth; and a feedback correction factor KO₂ by which a deviation of the A/F ratio from the theoretical value A/F ratio in an O₂ feedback region with a comparatively low engine revolution speed (say, 4,000 rpm or lower) is corrected, while K₂ includes a fuel increase constant for acceleration by which the fuel injection quantity is increased during acceleration of a car.

The standard fuel injection quantity Ti is set in such a manner that an intake mixture, in combination with a quantity of air intake into a cylinder in a particular operating condition of the engine determined by Ne and P_{B}, may provide a desired A/F ratio close to the theoretical value of A/F ratio. Two sets of Ti map, one for the low-speed valve timing and the other for the high-speed valve timing, are prepared and stored in the electronic control circuit 7.

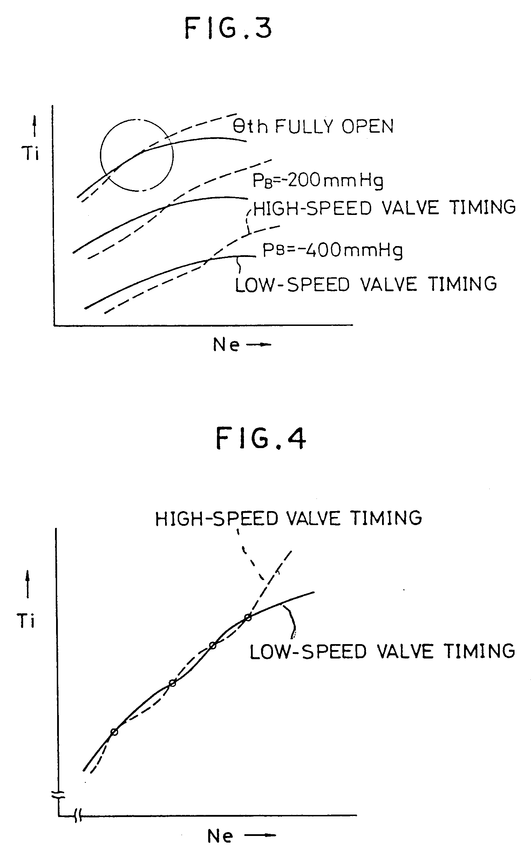

In Figure 3, the Ti value in the Ti map for the low-speed valve timing is indicated by a solid line curve while the Ti value in the Ti map for the high-speed valve timing is indicated by a dotted line curve. As is clear from Figure 3, the intake air quantity tends to level off with the increase of Ne at the low-speed valve timing. On the other hand, at the high-speed valve timing, the intake air quantity keeps on increasing further to eventually surpass that at the low-speed value timing as the charging efficiency increases with the increase of Ne, so that the Ti value for the low-speed valve timing and that for the high-speed valve timing come to coincide with each other at some point on the curves. At this point, the air intake quantity is the same whether at the low-speed or high-speed valve timing. So is the A/F ratio at this point. Therefore, the engine output is also practically the same at this point.

The charging efficiency subtly fluctuates with the change of Ne. This fluctuation becomes more conspicuous in the range approaching the point at which the throttle opening (ϑth) is fully open so that, as shown in Figure 4, the Ti value for the low-speed valve timing and that for the high-speed valve timing become equal to each other at a plurality of points. As will be discussed later, when the valve timing is changed over at one of these points where the Ti value for the low-speed valve timing and that for the high-speed valve timing become equal to each other, the valve timing changeover is more likely to cause a hunting especially in the range where the throttle opening is large, thus adversely affecting durability of the changeover mechanism 13.

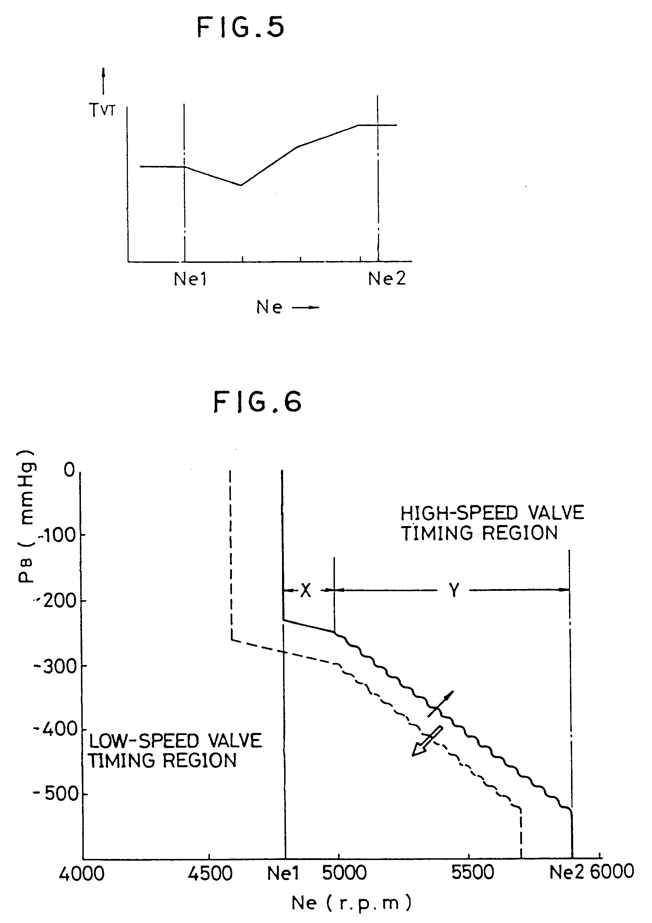

In the high-load region, the mixture is enriched according to the above-mentioned high-load fuel increase factor K_{WOT}. Since a higher output can be brought about with the high-speed valve timing in this high-load region, a high-load determinant reference value T_{VT} based on the fuel injection quantity is experimentally obtained as shown in Figure 5. A T_{VT} value corresponding to Ne is calculated from a T_{VT} table and when Tout is greater than T_{VT}, the valve timing is changed over to the high-speed one as will be explained later. In such a case, if it is prearranged such that the Tout ≧ T_{VT} region includes regions in which, as discussed in the foregoing, the Ti values for the low-speed valve timing and the high-speed valve timing become equal to each other, the abovementioned hunting occurring with changeover of the valve timing can be prevented. A T_{VT} table applicable to an automatic vehicle is different from that applicable to a manual vehicle.

In order to prevent an over-revolution speed of the engine, fuel is cut when Ne exceeds the revolution limiter value N_{HFC}. If a load acting on the timing belt is considered in this connection, it can be seen that the shorter the valve-open duration is, the greater the acceleration of the valve opening operation, and as a result, the load on the timing belt becomes greater, while the revolution speed Ne which causes a valve jump becomes lower due to an increase in said acceleration rate. Therefore, an allowable revolution speed of the engine should be different between the low-speed valve timing in which the valve-open duration is shorter and the high-speed valve timing in which the valve-open duration is longer, so that in this embodiment example the revolution limiter value is set at a comparatively lower one N_{HFC1} (for example, 7500 rpm) for the low-speed valve timing and at a comparatively higher one N_{HFC2} for example, 8100 rpm) for the high-speed valve timing.

Next, referring to Figure 6, explanation will now be made of valve timing changeover characteristics. In Figure 6, a solid-line curve shows the changeover characteristic observed when the valve timing is changed over from the low-speed one to the high-speed one, while the dotted-line curve shows that observed when changing over in the opposite way.

A valve timing changeover is performed in a region of the engine revolution speeds ranging between the lower-limit engine revolution speed Ne1 at which the engine output obtained with the low-speed valve timing always exceeds that obtained with the high-speed valve timing and the upper-limit engine revolution speed Ne2 at which the engine output obtained with the high-speed valve timing always exceeds that obtained with the low-speed valve timing. In this embodiment example of the present invention, the valve timing changeover from the low-speed one to the high-speed one and vice versa are so set as to have a hysteresis; for example, Ne1 set at 4800 rpm/4600 rpm and Ne2 at 5900 rpm/5700 rpm.

In Figure 6, the region or range represented by X is one in which the valve timing changeover is performed through comparison of T_{VT} with Tout while the region or range denoted by Y is one in which the valve timing changeover is performed through comparison made between a Ti value in the Ti map (hereinafter referred to as Ti_{L} map) for the low-speed valve timing and a Ti value in the Ti map (hereinafter referred to as Ti map) for the high-speed valve timing. Since the changeover characteristic in the X region is affected also by other parameters than Ne and P_{B} having much to do with calculation of Tout, it can not be shown exactly in the graph of Figure 6 in which the horizontal axis represents Ne and the vertical axis represents P_{B}, so that the one shown therein is more for an illustration purpose.

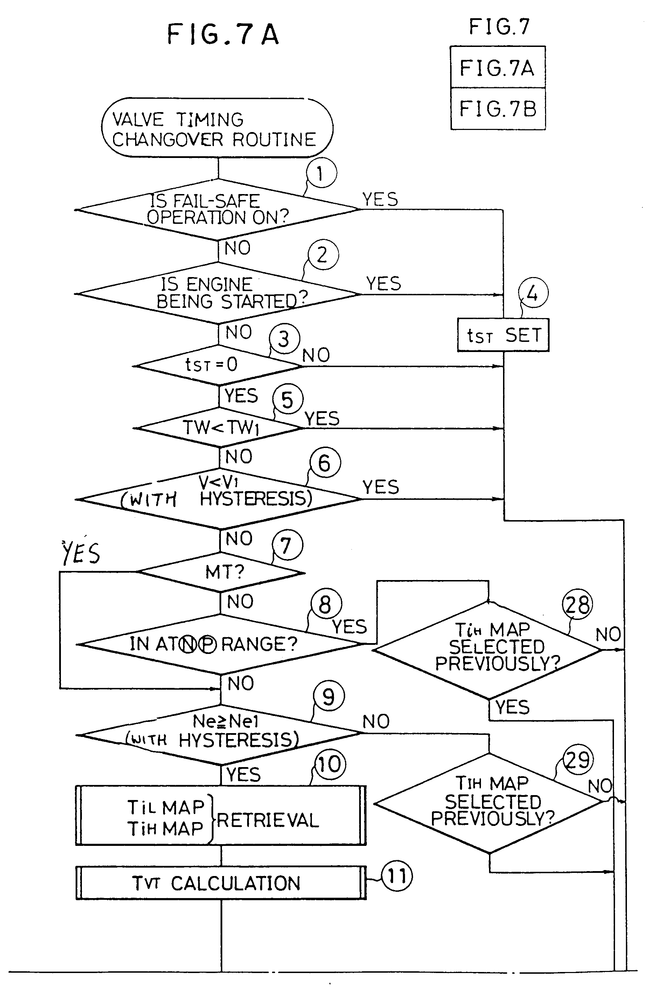

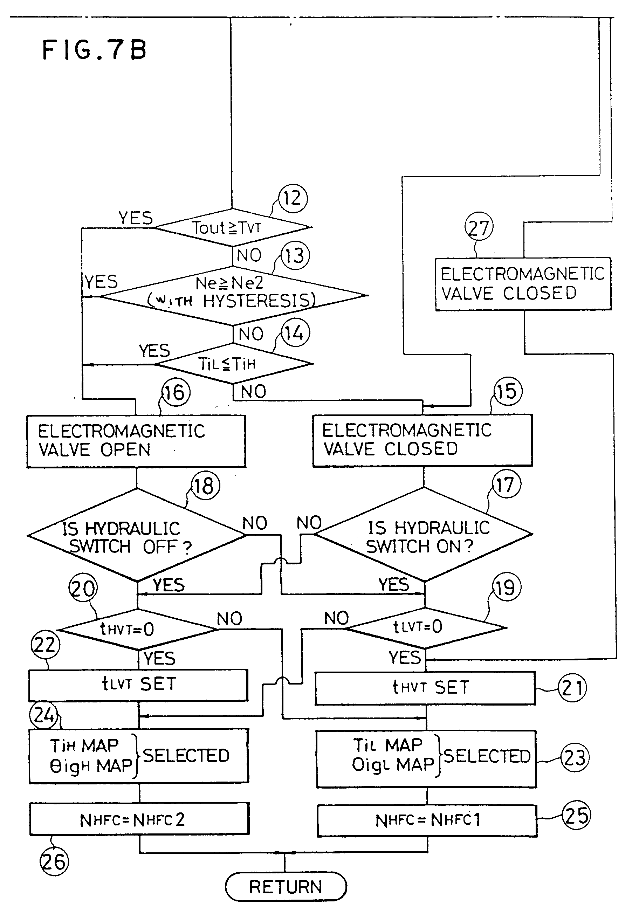

Next, referring to Figure 7, we will now explain control by the electronic control circuit 7 of the valve timing changeover, that is a control program for output of signal VTS to the electromagnetic valve 19.

Step 1 determines whether or not signals from the respective sensors are being normally inputted into the electronic control circuit 7 or, in other words, one for determining whether to start a fail-safe operation. Step 2 determines whether or not the engine is being started and step 3 determines whether or not the remainder time T_{ST} of the delay timer has elapsed to 0. A time setting for T_{ST} (e.g. 5 seconds) is performed in a step 4 during the engine starting so that the timing operation may start after the start of the engine. Step 5 determines whether or not the water temperature TW is lower than the present one TW1 (fort instance, 60°C), that is, whether or not the warming up of the engine has been achieved. Step 6 determines whether or not the vehicle speed V is lower than the present lowest vehicle speed V1 (for instance, 8 km/5km with a hysteresis), step 7 determines whether or not it is a manual vehicle (MT), step 8 determines, in case of an automatic vehicle (AT), whether the shift lever is set at the parking (P) position or the neutral (N) position, and step 9 determines whether or not Ne is greater than the above mentioned lower-limit value Ne1, so that when the fail-safe operation is going on or the engine is being started or the time preset with the delay timer has not elapsed as yet after the start of the engine, or warming up of the engine is going on, or the vehicle is parked or running at a slow speed, or the shift gear is set at P or N position, or Ne is smaller than Ne₁, the electromagnetic valve 19 is closed to hold the valve timing set at the low-speed one as will be explained later.

When it is determined at the step 9 that the Ne ≧ Ne1, the Ti_{L} map and Ti_{H} map are retrieved at a step 10 in order to obtain a Ti value in the Ti_{L} map (said value being hereinafter referred to as Ti_{L}) and a Ti value in the Ti_{H} map (said value being hereinafter referred to as Ti_{H}) which correspond to the current Ne and P_{B}. Then, in a next step 11, a T_{VT} corresponding to Ne is calculated from the T_{VT} table. In a step 12, this T_{VT} is compared with Tout obtained previously (that is, Tout obtained in the immediately preceding round of operation) so as to determine whether or not it is Tout ≧ T_{VT}, that is, to determine whether it is in the high-load condition in which the mixture is enriched. When it is found Tout is smaller than T_{VT}, the program is advanced to step 13 for determining whether Ne is higher than the aforementioned upper-limit value Ne₂ or not. If it is found that Ne is smaller than Ne₂, the program is advanced to a step 14 to compare Ti_{L} and Ti_{H} with each other, both of which have been obtained at the step 10, and if Ti_{L} is larger than Ti_{H} (Ti_{L}>Ti_{H}), a command or instruction to close the electromagnetic valve 19 is given out at a step 15, said instruction being tantamount to one to change over the valve timing to the low-speed one. When Tout ≧ T_{VT}, Ne ≧ Ne₂, or Ti_{L} ≦ Ti_{H}, a command or instruction to open the electromagnetic valve 19, that is, an instruction to change over the valve timing to the high-speed one is given out in a step 16. Further, when an instruction to close the valve 19 in the step 15 has been given out, it is determined at a step 17 whether or not the hydraulic switch 20 has been turned on, that is, whether or not the oil pressure in the oil supplying passage 14 has been reduced to a lower level. When the hydraulic switch 20 has been turned on, whether or not the remainder time t_{LVT} for the low-speed valve timing changeover delay timer has been reduced to O is determined at a step 19. When it is found to be ${\text{t}}_{\text{LVT}} \text{= 0}$ , the remainder time t_{HVT} for the high-speed valve timing changeover delay is set to a predetermined time (for example, 0.1 sec) at a step 21. Next, at a step 23, a selection processing is performed to select the Ti_{L} map as a Ti map for use with a fuel injection control routine, and the ignition timing map for the low-speed valve timing (ϑ igL map) as an ignition timing map, respectively. Then, at a step 25, a processing is performed so as to turn the revolution limiter value N_{HFC} to the value N_{HFC1} for the low-speed valve timing.

When the instruction to open the valve has been given out at the step 16, it is determined at a step 18 whether or not the hydraulic switch 20 is turned off, that is, to determine whether or not the oil pressure in the oil supplying passage 14 has increased to a higher level. When the hydraulic switch 20 has been turned off, it is at a step 20 in which whether or not the remainder time tHVT for the high-speed valve timing changeover delay timer has been reduced to 0. If it is found to be ${\text{t}}_{\text{HVT}} \text{= O}$ 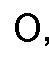 , the remainder time t_{LVT} for the low-speed valve timing changeover delay is set to a predetermined time (for example, 0.2 second) at a step 22. Next, at a step 24, a selection processing is performed to select the Ti_{H} map as a Ti map for use with the fuel injection control routine, and the ignition timing map for the high-speed valve timing(ϑ igH) as an ignition timing map, respectively. Then, at a step 26, a processing is performed so as to turn the revolution limiter value N_{HFC} to the value N_{HFC2} for the high-speed valve timing.

The time set with each of both the changeover delay timers described in the foregoing is predetermined so as to be adapted to the response delay time when the changeover mechanism 13 of each cylinder completes the required changeover operation as a result of the oil pressure change in the oil supplying passage 14. When the electromagnetic valve is being changed over from the open position to the closed position, the program advances in order of 17 - 20 - 22 - 24 - 26 until the hydraulic switch 20 is turned on. Even with said switch turned on, the program is advanced in order of 17 - 19-24 - 26 until the changeover mechanism 13 of each cylinder has been turned to the low-speed valve timing side. Furthermore, when the changeover valve 16 is not turned to its closed position even with an instruction to close the valve due to a malfunction of the electromagnetic valve 19 or the changeover valve 16 with the result that the hydraulic switch 20 remains unable to turn on no matter how long it is waited for, the program is then advanced similarly in order of 17 - 20 - 22 - 24 -26 as in the foregoing, indicating that unless the changeover mechanism 13 of each of all the cylinders has been turned to the low-speed valve timing side, the fuel injection remains so controlled as to be one suitable for the high-speed valve timing. When the electromagnetic valve 19 is changed over from the closed position to the open position, the fuel injection should remain so controlled as to be one suitable for the low-speed valve timing in the like manner as above unless the changeover mechanism 13 of each of all the cylinders has been set to the high-speed valve timing side.

Also, when the fail-safe operating is going on, or the engine is being started or the time preset with the delay timer has not expired as yet after the start or the engine, or the engine warming-up is still going on, or the vehicle is parked or running at a slow speed, as stated previously herein, the program is advanced to go from any of the steps 1 through 3 or 5 through 6 to the step 27 to give out an instruction to close the electromagnetic valve 19, and further advanced to go from the step 27 to the steps 21 - 23 - 25 in that order. When at N or P position, the program is advanced to go from the step 8 to the step 28 in which whether or not the Ti_{H} map has been selected previously is determined. Then, when Ne is found to be smaller than Ne₁, the program is advanced to go from the step 9 to the step 29 at which a like determination or discrimination as made at the step 29 is carried out. If it is found that the Ti_{H} map has not been selected previously, the program is advanced to go from the steps 28,29 to the step 15. If the Ti_{H} map has not been selected previously for use, that is, when the changeover mechanism 13 of each of all the cylinders has not been set to the high-speed valve timing side, the program advances in order of 27 -21 - 23 - 25 as in the foregoing so that the fuel injection may be controlled so as to be adapted to the low-speed valve timing irrespective of the hydraulic switch 20. This is a countermeasure designed to deal with the hydraulic switch in case the switch 20 should remain turned off due to breaking of its wiring.

More specifically, N_{HFC1} is set higher than Ne₂. Thus, normally, the valve timing is changed over to the high-speed one before Ne has increased to N_{HFC1}, causing the N_{HFC1} to be changed over to N_{HFC2}. Therefore, there is no fuel cut effect at N_{HFC1}. In the operating condition in which the program is advanced to go from the steps 1 through 8 to the step 27, however, the low-speed valve timing is retained even when Ne comes to exceed Ne₂ due to racing or the like so that a fuel cut is effected at N_{HFC1}. Further, this fuel cut at N_{HFC1} goes on until t_{HVT} becomes zero (0), that is, until the changeover mechanism 13 is actually set to the high-speed valve timing side, even after the low-speed valve timing has been changed over to the high-speed one.

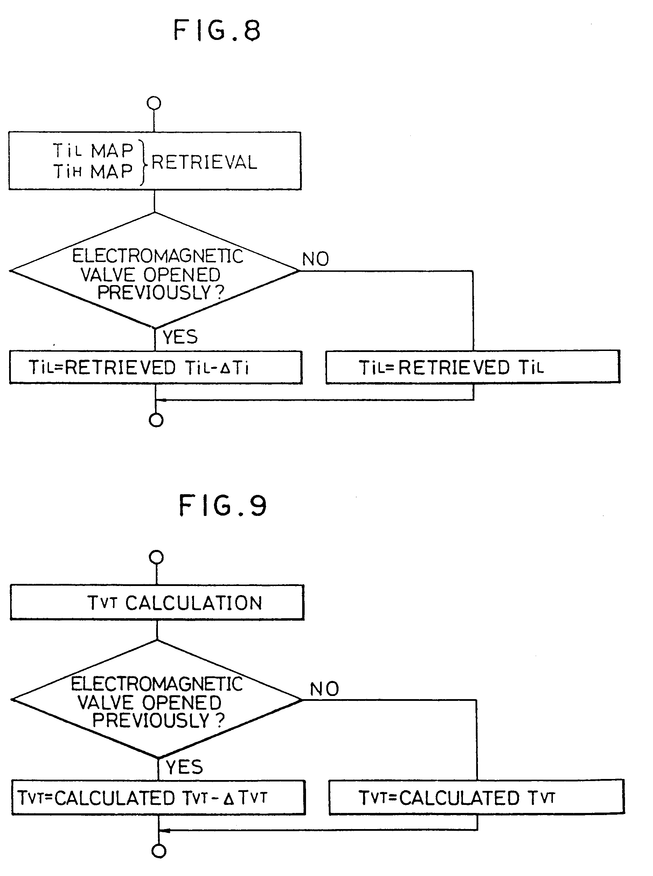

In the subroutine for retrieval of the Ti_{L} map and the Ti_{H} map at the step 10, whether or not an instruction to open the electromagnetic valve 19 has been previously given out is determined as indicated in Figure 8. When it is found that the instruction to open the valve has not been given out, the Ti_{L} value to be used at the step 14 is taken as a Ti_{L} value retrieved from the Ti_{L} map. When the instruction to open the valve has been given out, a processing to subtract a predetermined amount of hysteresis ΔTi from the retrieved Ti_{L} value is performed so as to use the balance as the Ti_{L}, and the changeover characteristic in the Y region in Figure 6 is then added with the hysteresis.

Also in the subroutine for calculation of T_{VT} at the step 11, as shown in Figure 9, whether or not the instruction to open the electromagnetic valve 19 has been given out previously is determined. When the instruction to open the valve has not been given out, T_{VT} to be used at the step 12 is one calculated from the T_{VT} Table. When the instruction to open the valve has bee given out, a processing to subtract a predetermined amount of hysteresis ΔT_{VT} from the calculated value is performed so as to use the balance as the T_{VT}, and the changeover characteristic in the X region in Figure 6 is then added with the hysteresis.

Furthermore, signals from the hydraulic switch 20 are used to determine whether the valve timing has been changed over normally. When there has arisen any irregularity or abnormality in the valve timing changeover, such fail-safe operation as alarming, fuel reduction, suspension of the valve timing changeover control or the like is carried out.

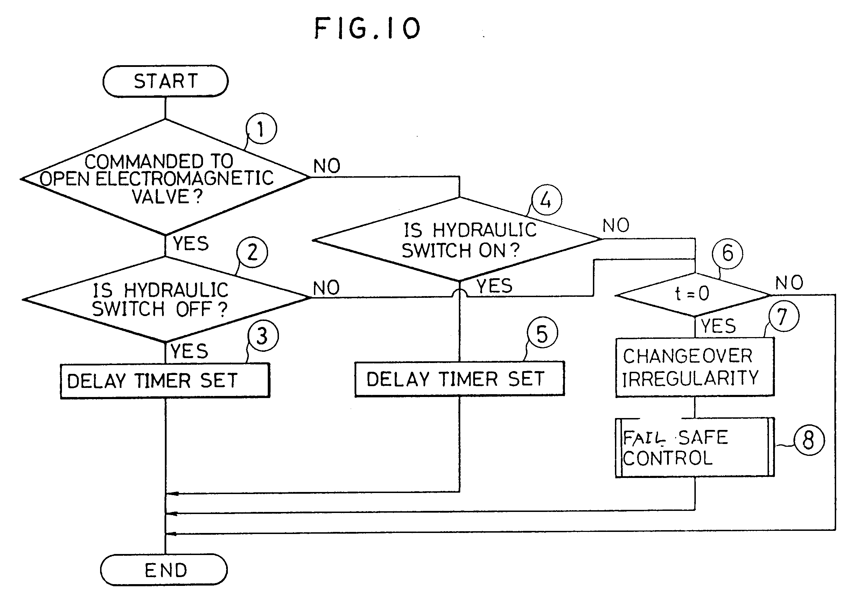

The subroutine for this fail-safe control operation is as shown in Figure 10 and performed as follows.

First, at a step 1, it is determined whether or not the instruction given out to the electromagnetic valve 19 at one of the steps 15, 16 and 27 in Figure 7 is one instructing said valve to open (that is, a command for the high-speed valve timing). When the instruction is found to be an instruction to open the valve, the subroutine is advanced to got to the step 2 to determine whether or not the hydraulic switch 20 is turned off. When the oil pressure is high (indicating the high-speed valve timing condition) and the hydraulic switch 20 is off, the subroutine is then advanced to go to the step 3 in which the remainder time t for the delay timer built in the electronic control circuit 7 is set to a predetermined time (for example, 4 seconds), thereby completing one round of the processing. When an instruction to close the valve (that is, a command for the low-speed valve timing) has been given out, the subroutine program is advanced to go from the step 1 to the step 4 to determine whether or not the hydraulic switch 20 is on. When the oil pressure is low (indicating the low-speed valve timing condition) and the hydraulic switch 20 is on, the program is advanced to go to the step 5 so as to set the remainder time t to a predetermined time in like manner as mentioned above, thereby completing one round of the processing. The delay time is automatically set to the initial setting when the ignition switch is turned on.

Now, let us imagine a case where an instruction given out to the electromagnetic valve 19 is changed. At the initial moments following the instruction change, the hydraulic switch 20 still remains set in the condition existing prior to the changeover instruction due to delay in change of the oil pressure. Therefore, when the instruction is changed to one to open the valve, the program is advanced to go from the step 2 to the step 6, and when the instruction is changed to one to close the valve, the program is advanced to go from the step 4 to the step 6 and one round of the processing is then completed without doing anything until the remainder timer t for the delay time is reduced to 0. When the remainder timer t becomes 0, that is, when the hydraulic switch 20 is still retained in the position set prior to the changeover instruction even after the predetermined starting from the outset of the changeover instruction has expired, the program is then advanced to go from the step 6 to the step 7 to indicate a valve timing changeover irregularity with an indicator or the like, and further advanced to go to the step 8 to execute controls such as a fuel reduction and others for the fail-safe purpose.

It is much desired to execute the fail-safe operation as soon as possible when there occurs a valve timing changeover irregularity. In this embodiment example of the present invention, therefore, the hydraulic switch 20 is integrally built into the changeover valve 16 so that the hydraulic switch 20 may be turned on and off quickly with operation of the changeover valve 16. This enables the predetermined time for the delay timer to be reduced to the shortest possible time.

As described in the foregoing, according to the present invention, when a valve timing changeover irregularity occurs due to a malfunction of the valve means or an oil leakage, such an irregularity is accurately determined and dealt with properly by taking necessary fail-safe countermeasures. Another advantage of the present invention is that such an oil pressure detecting means as a hydraulic switch which is inexpensively obtainable is used to detect and determine said changeover irregularity.

## Claims

1. A fuel injection control method for an electronically controlled fuel injection type engine (1) in which valve timing for at least one group of intake valves and exhaust valves is changed over by a hydraulically operated changeover mechanism (13) and a valve means for controlling the oil supply to the changeover mechanism, the valve means comprising a changeover valve (16) which is interposed in an oil supplying passage for supplying oil to the changeover mechanism and a control valve (19) for controlling the changeover valve, said method comprising the steps of:
detecting an oil pressure of the oil supplying passage in a downstream portion of the changeover valve; and
confirming in accordance with changes of the detected oil pressure whether the valve timing has been actually changed over as attempted;
characterised in that the method further comprises the steps of:
setting up a suitable quantity or rate of fuel injection (Ti) for each of the valve timing settings and then selecting one according to the valve timing selected; and
continuing the fuel injection at an injection quantity corresponding to the valve timing before the valve timing changeover when the actual valve timing changeover is not confirmed.

2. A fuel injection control method according to claim 1, wherein the fuel injection is continued, even if the detected oil pressure has changed, at an injection quantity corresponding to the valve timing before the valve timing changeover until a preset time from the time of the valve timing changeover has lapsed.

3. A fuel injection control method according to claim 1 or 2, further including a determining step for determining whether the detected oil pressure has changed in compliance with a valve-timing changeover instruction given by a control means (7) to detect an irregularity in the changeover valve (16).

4. A fuel injection control method according to claim 3, wherein said determining step is performed after the expiration of a predetermined time period after the valve-timing changeover instruction.

5. A fuel injection control method according to claim 3 or 4, further including a step for providing an alarm when an irregularity in the changeover valve (16) is determined.

6. A fuel injection control method according to claim 3, 4 or 5, further including a step for performing a fail-safe operation with respect to an irregularity in the changeover valve (16) determined when the detected oil pressure has not changed to one corresponding to the instruction after expiration of a predetermined or preset time.

## Patentansprüche

1. Verfahren zur Steuerung der Kraftstoffeinspritzung für einen Motor (1) mit elektronisch gesteuerter Kraftstoffeinspritzung, bei dem die Ventilsteuerzeit für zumindest eine Gruppe von Einlaßventilen und Auslaßventilen durch einen hydraulisch betätigten Umschaltmechanismus (13) umschaltbar ist, und einer Ventileinrichtung zum Steuern der Ölzufuhr zum Umschaltmechanismus, wobei die Ventileinrichtung ein Umschaltventil (16) aufweist, das in einem Ölzufuhrkanal zur Lieferung von Öl zum Umschaltmechanismus eingefügt ist, und einem Steuerventil (19) zum Steuern des Umschaltventils, wobei das Verfahren die Schritte aufweist:
Ermitteln eines Öldrucks des Ölzufuhrkanals in einem Stromabwärtsbereich des Umschaltventils; und
Bestätigen, ob die Ventilsteuerzeit tatsächlich wie versucht umgeschaltet wurde, in Abhängigkeit von Änderungen des ermittelten Öldrucks,
dadurch gekennzeichnet, daß das Verfahren weiter die folgenden Schritte aufweist:
Bereitstellen einer geeigneten Kraftstoffeinspritzmenge oder -rate (Ti) für jede der Ventilsteuerzeiteinstellungen und dann Auswählen einer Menge oder Rate in Abhängigkeit von der ausgewählten Ventilsteuerzeit; und
Beibehaltung der Kraftstoffeinspritzung mit einer Einspritzmenge, die der Ventilsteuerzeit vor dem Umschalten der Ventilsteuerzeit entspricht, wenn die vorliegende Ventilsteuerzeitumschaltung nicht bestätigt wird.

2. Verfahren zur Steuerung der Kraftstoffeinspritzung nach Anspruch 1, dadurch gekennzeichnet, daß die Kraftstoffeinspritzung sogar dann, wenn der ermittelte Öldruck sich geändert hat, mit einer Einspritzmenge fortgesetzt wird, die der Ventilsteuerzeit vor der Ventilsteuerzeitumschaltung entspricht, bis eine voreingestellte Zeit ab dem Zeitpunkt der Ventilsteuerzeitumschaltung verstrichen ist.

3. Verfahren zur Steuerung der Kraftstoffeinspritzung nach Anspruch 1 oder 2, dadurch gekennzeichnet, daß es weiter einen Entscheidungsschritt zur Entscheidung aufweist, ob sich der ermittelte Öldruck gemäß einer durch Steuermittel (7) ausgegebenen Ventilsteuerzeit-Umschaltanweisung geändert hat, um eine Unregelmäßigkeit im Umschaltventil (16) zu ermitteln.

4. Verfahren zur Steuerung der Kraftstoffeinspritzung nach Anspruch 3, dadurch gekennzeichnet, daß der Entscheidungsschritt nach Ablauf einer vorgegebenen Zeitdauer nach der Ventilsteuerzeit-Umschaltanweisung durchgeführt wird.

5. Verfahren zur Steuerung der Kraftstoffeinspritzung nach Anspruch 3 oder 4, dadurch gekennzeichnet, daß es weiter einen Schritt zum Liefern eines Alarms aufweist, wenn auf eine Unregelmäßigkeit im Umschaltventil (16) entschieden wird.

6. Verfahren zur Steuerung der Kraftstoffeinspritzung nach Anspruch 3, 4 oder 5, dadurch gekennzeichnet, daß es weiter einen Schritt zur Durchführung eines Fail-Safe-Betriebs (Notbetrieb) hinsichtlich der Entscheidung auf eine Unregelmäßigkeit im Umschaltventil (16) aufweist, wenn der ermittelte Öldruck sich nicht auf einen Wert verändert hat, der der Anweisung nach Ablauf einer vorgegebenen oder voreingestellten Zeit entspricht.

## Revendications

1. Procédé de pilotage de l'injection de carburant pour un moteur du type à injection de carburant pilotée électroniquement (1) dans lequel un diagramme d'ouverture de soupape pour au moins un des groupes de soupapes d'admission ou de soupapes d'échappement est permuté par un mécanisme de permutation actionné hydrauliquement (13) et dans lequel un moyen formant valve pour piloter l'arrivée d'huile vers le mécanisme de permutation, le moyen formant valve comprenant un distributeur de permutation (16) qui s'interpose sur le passage d'huile amenant l'huile au mécanisme de permutation et une valve de pilotage (19) pour piloter le distributeur de permutation, ledit procédé comprenant les étapes :
de détection de la pression d'huile du passage d'amenée dans une partie en aval du distributeur de permutation ; et
de confirmation selon les changements de la pression d'huile perçue, si le diagramme d'ouverture des soupapes a été effectivement permuté comme commandé ;
caractérisé en ce que le procédé comprend de plus les étapes :
d'ajustement d'une quantité ou d'un débit d'injection de carburant (Ti) pour chaque réglage de diagramme d'ouverture de soupapes et ensuite de choix de celui en rapport avec le diagramme d'ouverture de soupapes sélectionné ; et
de maintien de l'injection de carburant à la quantité d'injection correspondant au diagramme d'ouverture de soupapes avant la permutation de diagramme d'ouverture de soupape si la permutation de diagramme d'ouverture de soupapes en cours n'est pas confirmée.

2. Procédé de pilotage de l'injection de carburant selon la revendication 1, dans lequel l'injection de carburant est maintenue, même si la pression d'huile perçue a changé, à une quantité d'injection correspondant au diagramme d'ouverture de soupapes avant la permutation de diagramme d'ouverture de soupapes pendant un temps prédéterminé à partir du moment où la permutation de diagramme d'ouverture de soupapes est échue.

3. Procédé de pilotage de l'injection de carburant selon la revendication 1 ou 2, incluant en outre une étape d'évaluation pour évaluer si la pression d'huile perçue a changé en réponse à l'instruction de permutation de diagramme d'ouverture de soupapes, lancée par le moyen de commande (7) pour détecter un dysfonctionnement dans le distributeur de permutation (16).

4. Procédé de pilotage de l'injection de carburant selon la revendication 3, dans lequel ladite étape d'évaluation est effectuée après l'expiration d'une période de temps prédéterminée suivant l'instruction de permutation de diagramme d'ouverture de soupapes.

5. Procédé de pilotage de l'injection de carburant selon la revendication 3 ou 4, incluant en outre une étape pour déclencher une alarme quand un dysfonctionnement du distributeur de permutation est établi.

6. Procédé de pilotage de l'injection de carburant selon la revendication 3, 4 ou 5, incluant en outre une étape de mise en sécurité sur incident en rapport à un dysfonctionnement dans le distributeur de permutation (16) constaté lorsque la pression d'huile perçue n'a pas changé pour celle correspondant à l'instruction après l'expiration du temps prédéterminé ou préétabli.
